Europäisches Patentamt

European Patent Office

Office européen des brevets

(11) Veröffentlichungsnummer : **0 060 477**
**B1**

(12) # EUROPÄISCHE PATENTSCHRIFT

(45) Veröffentlichungstag der Patentschrift : 25.07.84

(21) Anmeldenummer : 82101809.0

(22) Anmeldetag : 08.03.82

(51) Int. Cl.³ : **G 11 B 11/10**, G 03 G 19/00

(54) **Magneto-optisches Speicherverfahren.**

(30) Priorität : 18.03.81 DE 3110572

(43) Veröffentlichungstag der Anmeldung : 22.09.82 Patentblatt 82/38

(45) Bekanntmachung des Hinweises auf die Patenterteilung : 25.07.84 Patentblatt 84/30

(84) Benannte Vertragsstaaten : DE FR GB IT

(56) Entgegenhaltungen :
US-A- 3 561 863
US-A- 3 761 645
US-A- 4 101 905
PATENTS ABSTRACTS OF JAPAN, Band 4, Nr. 15(E-170), 5. Februar 1980, Seite 98E170

(73) Patentinhaber : **AGFA-GEVAERT Aktiengesellschaft D-5090 Leverkusen 1 (DE)**

(72) Erfinder : **Greiner, Joachim, Dr.
U.-von-Hassel-Strasse 15
D-8026 Ebenhausen (DE)**
Erfinder : **Nippe, Burkhard, Dr.
Krennerweg 20
D-8000 München 71 (DE)**

**Beschreibung**

Die Erfindung betrifft ein Verfahren zur Aufzeichnung und Abtastung von Informationen auf magnetisierbarem Material insbesondere magnetisierbaren Schichten.

Die Speicherung von Informationen auf einem bewegten Träger, der aus einem magnetisierbaren Material besteht oder der zumindest eine magnetisierbare Schicht enthält, wird heute vielseitig angewandt. Als Beispiele seien genannt : Speicherung von Ton und Bild auf Magnetband, Datenfixierung auf Plattenspeichern der Computertechnik usw.

Zur Aufbringung der Information auf den Aufzeichnungsträger dient der Aufzeichnungskopf. Er besteht heute meist aus einem weichmagnetischen Windungen tragenden Ringkern mit einem feinen Spalt, in dem durch den in den Windungen fließenden informationstragenden Strom das Aufzeichnungsfeld erzeugt wird. Durch die durch Stromschwankungen erzeugten Feldschwankungen und die Bewegung des Informationsträgers wird dieser in einen lokal sich ändernden magnetischen Zustand versetzt, der der aufzuzeichnenden Information entspricht. Voraussetzung hierfür ist, daß der Informationsträger hartmagnetische Eigenschaften besitzt und damit eine relativ hohe Remanenz und ein relativ hohes Koerzitivfeld aufweist.

Die Abtastung geschieht meist mit einem induktiv arbeitenden Ringkopf, der im Prinzip wie der Sprechkopf aufgebaut ist. Durch den Spalt wird der Streufluß des bewegten Informationsträgers gezwungen, den weichmagnetischen Kern zu durchsetzen. Durch die Schwankungen des Flusses wird an den Spulenenden eine der Information entsprechende Spannung induziert.

Eine Löschung der Information erfolgt durch einen Wechselstrom, der einem Löschkopf zugeführt wird, der wiederum in ähnlicher Weise wie der Sprechkopf ausgebildet ist. Die Möglichkeit der Löschung ist einer der großen Vorteile der magnetischen Aufzeichnung. Im allgemeinen berühren die Köpfe den Informationsträger, so daß Verschleißerscheinungen an Kopf und Informationsträger auftreten. In Spezialfällen, wie z. B. bei Computerplattenspeichern, wird ein geringer Abstand zwischen Kopf und Informationsträger aufrechterhalten. Dadurch entsteht aber ein Wiedergabeverlust ; der sich mit sinkender Wellenlänge der Aufzeichnung immer stärker bemerkbar macht. Es sei bemerkt, daß schon Abstände zwischen Kopf und Informationsträger von 1 μm zu erheblichen Abstandsverlusten führen. Neben diesen meist angewandten Aufzeichnungs-, Abtast- und Löschverfahren, sind noch andere Verfahren zu nennen, die in ihrer praktischen Bedeutung jedoch zurücktreten. So ist z. B. für die Aufzeichnung ein Verfahren bekannt, bei dem das bewegte Speichermaterial über den Curiepunkt erhitzt und anschließend im informationstragenden Magnetfeld abgekühlt wird.

Für die Wiedergabe wurden der Effekt der elektrischen Widerstandsänderung im Magnetfeld, der Halleffekt oder die Abtastung nach dem Oberwellenverfahren (US 3 364 496) vorgeschlagen. Bei allen Abtastköpfen, die auf den genannten Effekten basieren, macht sich wie beim Ringkopf, die Abnahme des Streufeldes der Aufzeichnung mit der Entfernung vom Informationsträger bemerkbar. Es tritt bei berührungsloser Abtastung ein Informationsverlust ein.

Abtastverfahren, die ohne Abstandsverluste arbeiten, basieren auf der Nutzung der magnetooptischen Faraday- bzw. Kerreffekte. Der Einsatz derartiger Verfahren scheiterte bisher daran, daß die Verdrehung der Polarisationsebene eines Lichtstrahles durch die Streufelder der Aufzeichnung so gering ist, daß es erhebliche Schwierigkeiten bereitet, den Informationsträger mit der erforderlichen Genauigkeit zu bewegen.

Verfahren zur direkten Sichtbarmachung der Aufzeichnungen eines magnetischen Informationsträgers basieren auf der Abtastung des ruhenden Trägers mit Hilfe der Bitterstreifentechnik. Dieses Verfahren wurde in der Grundlagenforschung zur Sichtbarmachung der Struktur magnetischer Domänen entwickelt. Hierbei wird eine Suspension weichmagnetischer Teilchen auf die gut polierte Oberfläche der zu untersuchenden Probe aufgegossen. Durch ablagerung der Teilchen in den Streufeldern der Domänenstruktur werden die Domänen bzw. die Domänenwände sichtbar gemacht. Basierend auf einer Beziehung von Kittel (Phys. Review 76, Seite 1527 (1949)), nach der die Teilchendichte von Multidomänenbildern in einem Feld H durch die Beziehung

$$p(H) = p(o)\, e^{\chi H^2 V/2kT}$$

($\chi$ = effektive Suszeptibilität, V = Teilchenvolumen, p(o) = Dichte im Feld H = 0) gegeben ist, läßt sich durch Überlagerung der Streufelder der Domänen durch geeignete äußere Felder eine Kontraststeigerung der Bitterstreifen erzielen. In Streufeldern, die dem äußeren Feld gleichgerichtet sind, tritt eine Erhöhung der Teilchenansammlungen ein, während in Streufeldern, die entgegengesetzt zum äußeren Feld verlaufen, die Teilchendichte abnimmt.

In ähnlicher Weise sammeln sich bei der Sichtbarmachung der Aufzeichnungen eines Informationsträgers die Pulverteilchen in den Stueufeldern der Aufzeichnung an. Auch hier lassen sich mit Vorteil äußere Magnetfelder zur Erhöhung des Kontrastes anwenden (N. H. Yeh, Colored Bitter Patterns on Tape, Digests of the Intermag Conference in Boston 1980, Vortrag 23-6). Dabei entspricht ohne äußeres Feld die Periode der Teilchenansammlungen einer halben aufgezeichneten Wellenlänge, während sie im äußeren Feld einer ganzen Wellenlänge zuzuordnen ist.

# 0 060 477

Unter Nutzung des Effektes der Teilchenansammlung in Streufeldern der Aufzeichnung wurde auch versucht, die zur Herstellung von Magnetbändern benutzten Pigmentteilchen zur Darstellung der magnetischen Aufzeichnung auf Magnetband zu nutzen. Diese Teilchen sind nicht weichmagnetisch, sondern besitzen Koerzitivfelder von etwa 24 $kAm^{-1}$

Bei einem derartigen Verfahren, das zur Herstellung unlöschbarer Bänder dient und in DE-B 1 522 965 beschrieben ist, wird eine Magnetsuspension, wie sie zur Herstellung eines Magnetbandes dient, auf ein die Aufzeichnung tragendes Magnetband aufgegossen. Nachdem sich die Teilchen im Streufeld der Aufzeichnungen angeordnet haben, wird eine Trägerschicht aufgebracht. Dann zieht man die Anordnung vom Original ab und hat eine Darstellung der Aufzeichnung als lokale Pigmentteilchenverteilung.

Bei einem anderen Verfahren, das die Pigmentteilchen des Aufzeichnungsmaterials nutzt, zeichnet man auf ein Magnetband mit einer löslichen Schicht auf. Anschließend löst man die Oberfläche des Bandes an, so daß die Magnetteilchen beweglich werden und sich in den Streufeldern anordnen können. Die Aufzeichnung wird als Strukturveränderung der Oberfläche sichtbar. Dieses Verfahren ist von Guckenburg in « Technik der Magnetspeicher » von Prof. Dr. F. Winckel, Springerverlag 1960, Seite 113-129, beschrieben.

In letzter Zeit sind auch Verfahren bekannt geworden, bei denen man bei ruhendem Informationsträger die Aufzeichnungen durch Beugung des Lichtes an den Gittern untersucht, die durch Eintrocknen der Bittermuster entstehen Nach N. H. Yeh, Colored Bitter Patterns of Tape, Digests of the Intermag Conference in Boston 1980, Vortrag 23-6, wird dieser Effekt benutzt, um an der ruhenden Aufzeichnung eine Spektrumanalyse durchzuführen. Damit eine Beugung möglich wird, müssen die Wellenlängen der Aufzeichnung und die Größe der Teilchen in der Suspension von der Größenordnung der Wellenlänge des Lichtes sein. Die erforderlichen Wellenlängen werden bei Videoaufzeichnung erreicht.

Wie bereits ausgeführt, treten bei Abtastköpfen, bei denen die direkte Einwirkung des Streufeldes der Aufzeichnung auf den Abtastkopf genutzt wird, bei berührender Abtastung Verschleißerscheinungen an Kopf und Träger auf. Bei berührungsloser Abtastung machen sich Abstandsverluste störend bemerkbar. Die berührungslose Abtastung mit einem Lichtstrahl unter Nutzung des Faraday- oder Kerreffektes weist eine zu geringe Empfindlichkeit auf. Die bisherige Nutzung der Bitterstreifen zur Wiedergabe der aufgezeichneten Information erfolgt am ruhenden Informationsträger. Dabei erfolgt der Nachweis entweder direkt über die Beugung des Lichtes an dem von den eingetrockneten Bitterstreifen gebildeten Beugungsgitter. Im ersten Fall wird nur ein Nachweis gebracht, ob und in welcher Weise ein Signal niedergelegt ist. Die zweite Methode kann zusätzlich genutzt werden, um eine Fourieranalyse des aufgezeichneten Signals durchzuführen.

Es besteht daher die Aufgabe einen magnetischen Informationsträger, eine Abtastanordnung und ein Verfahren zu finden, die bei einer Relativbewegung zwischen Informationsträger und Abtastanordnung eine berührungslose Abtastung genügender Empfindlichkeit, ohne daß Abstandsverluste auftreten, gestatten.

Die Aufgabe wurde erfindungsgemäß gelöst mittels zweier getrennter oder gleichzeitig ablaufender Vorgänge. Bei den getrennt ablaufenden Vorgängen werden in einem ersten Schritt in dem homogenen Informationsträger entsprechend der aufzuzeichnenden Information, Bereiche mit unterschiedlichem, magnetischem Zustand erzeugt. Im zweiten Schritt werden durch Verlagerung oder Anlagerung von magnetischen Pigmentteilchen in den Streufeldern dieser Bereiche Dichteschwankungen magnetischer Teilchen erzeugt, die ein optisch lesbares Reflexions- oder Transmissionsgitter darstellen. Die aufgezeichneten Bereiche besitzen vorzugsweise Abmessungen, deren Größenordnung im Bereich der Lichtwellenlänge und zwar in Richtung der Informationsebene > 0,2-< 20 $\mu$m liegt. Bei den gleichzeitig ablaufenden Vorgängen wirkt ein Aufzeichnungsfeld auf eine noch flüssige Suspension des Informationsträgers mit weich- oder hartmagnetischen Teilen der Größe von Ferrofluid. Es entsteht ein Reflexions- oder Transmissionsgitter.

Die so erzeugten linearen bzw. flächigen Beugungsgitter mit einer, von der aufgezeichneten Information abhängigen Gitterkonstanten werden bei Bewegung des Informationsträgers mit weißem oder monochromatischem Licht, dessen Wellenlängen sich vom Ultrarot bis ins Ultraviolett (0,8-0,4 $\mu$m) erstrecken können, phasenbezogen oder phasenfrei bestrahlt. Das gebeugte Licht, dessen Richtung von der Gitterkonstanten abhängt, wird informationsgemäß weiterverarbeitet und insbesondere wieder in elektrische Signale überführt. Als Lichtquelle kann ein Laser dienen.

Weitere Details des Erfindungsgedankens sind der Beschreibung und den Ansprüchen zu entnehmen.

Es zeigt :
Abbildung 1   einen erfindungsgemäßen Informationsträger mit einem magnetischen Gitter
Abbildung 2   eine erfindungsgemäße Abtastapparatur für monochromatisches Licht
Abbildung 3   ein Schema für monochromatische Abtastung
Abbildung 4   eine erfindungsgemäße Abtastapparatur für spektrale Bestrahlung

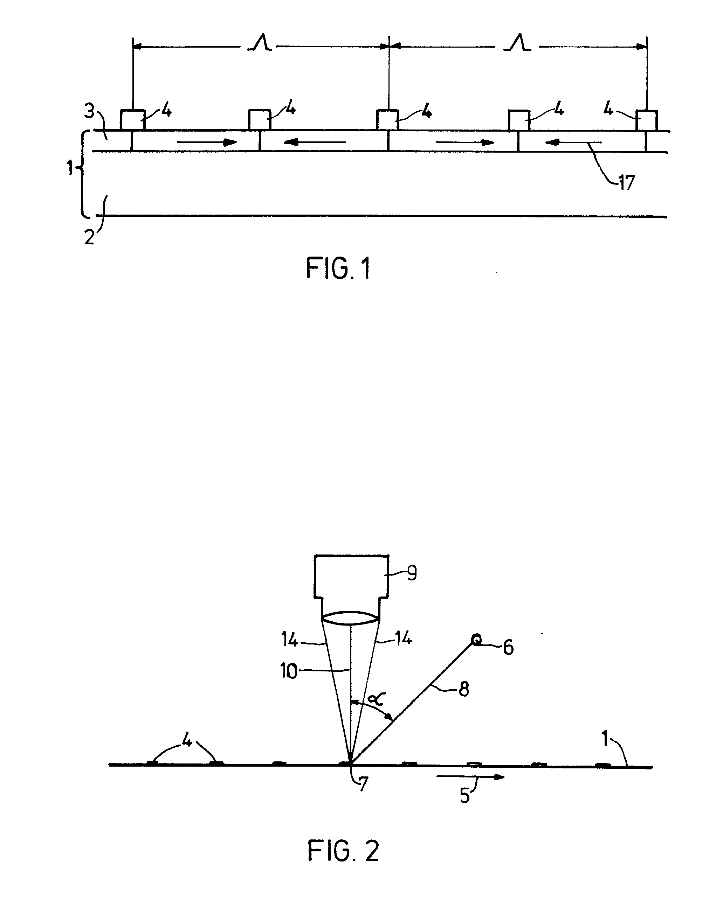

Die Abbildung 1 zeigt beispielhaft das durch diese Verfahrensschritte erhaltene Speichermaterial als Magnetband 1. Auf der Trägerfolie 2 befindet sich die magnetische Schicht 3, auf die die Wellenlänge $\Lambda$ aufgesprochen ist. Durch Aufbringen der Ferrofluidsuspension, eine Suspension weichmagnetischer Teilchen mit einer Größe von ca. 0,02 $\mu$m, und Abdunsten der Flüssigkeit ergeben sich durch die

3

magnetischen Kräfte die Erhöhungen 4, die als Gitterstäbe wirken und die den Abstand $\Lambda/2$ besitzen. Die Pfeile 17 deuten den Wechsel der Magnetisierung an.

Den prinzipiellen apparativen Aufbau einer erfindungsgemäßen Abtastapparatur zeigt beispielhaft Abb. 2. Das mit der gitterartigen Information 4 versehene Magnetband 1 wird in Pfeilrichtung 5 mit der Geschwindigkeit v bewegt. Das Band wird senkrecht zu den Gitterstäben und schräg zur Bandoberfläche von der Lichtquelle 6, z. B. einer starken Mikroskopierlampe oder einer Laserquelle, bestrahlt. Dieser Strahl 8 trifft in Punkt 7 auf die Oberfläche des Magnetbandes 1 und wird durch das Gitter 4 zum senkrecht darüberliegenden Detektor 9 als Strahl 10 bzw. Strahlenbündel 14 abgebeugt. Der Detektor 9 kann z. B. ein Mikroskop, ggf. mit angeschlossener Kamera sein, das gleichzeitig eine visuelle und fotografische Beobachtung gestattet. Nutzt man einen fotografischen Film, so wird man dessen Laufgeschwindigkeit mit der des Magnetbandes koppeln.

Den Winkel zwischen der Schichtnormalen und dem Strahl 8 bezeichnen wir mit $\alpha$. Zu diesem prinzipiellen Aufbau ist zu bemerken, daß die Position von Lichtquelle 6 und Detektor 9 vertauscht werden kann. Ausführungsvarianten von Lichtquelle und Detektor werden jeweils bei den Spezialfällen beschrieben.

Eine Beeinträchtigung der Beugungserscheinungen durch den Transport des magnetischen Signalträgers tritt nicht ein, da diese Geschwindigkeit gegenüber der Lichtgeschwindigkeit vernachlässigbar ist.

Es wurde außerdem festgestellt, daß durch die durch den Transport des Informationsträgers bedingte Unruhe die Abtastung durch Beugung im Gegensatz zur Abtastung durch den Kerr- bzw. Faradayeffekt nicht störend beeinflußt wird.

Die Durchführung der Erfindung ist mit Informationsträgern und Methoden möglich, die einzeln und/oder in Kombination neu sind. Hierzu gehören Verfahren zur optischen Abtastung des Informationsträgers und zur Weiterverarbeitung des abgetasteten Signals.

Nähere Einzelheiten für die Durchführung verschiedener Abtastverfahren sollen beispielhaft für ein Gitter besprochen werden, das durch die Aufzeichnung von Sinuswellen mit dem linearen Spalt eines Sprechkopfes und anschließende Entwicklung mit einer Magnetflüssigkeit ohne Anwendung äußerer Felder gewonnen wurde. Für ein solches Gitter gilt bei senkrechter Bestrahlung folgender Zusammenhang zwischen Beugungswinkel $\alpha$, Wellenlänge des Lichtes $\lambda$ und aufgezeichneter Wellenlänge $\Lambda$

$$\sin \alpha = k(\lambda/(\Lambda 2))$$

k gibt die Ordnung des Beugungsmaximus an. $\Lambda/2$ entspricht der Gitterkonstanten.

Die folgenden Betrachtungen werden für den Fall angestellt, daß die Abtastung des Gitters mit monochromatischem Licht der Wellenlänge $\lambda$ m erfolgt. Um eine eindeutige Zuordnung zwischen Beugungswinkel $\alpha$ und aufgezeichneter Wellenlänge $\Lambda$ zu gewährleisten, muß berücksichtigt werden, daß es beim Durchlaufen eines beliebigen $\Lambda$-Bereiches zu einer Überlappung der $\alpha$-Bereiche des Maxima verschiedener Ordnung kommen kann. Zur Untersuchung dieses Effektes drücken wir die aufgezeichnete halbe Wellenlänge $\Lambda/2$ in Einheiten von $\lambda$ m aus $((\Lambda/2) = g \lambda m)$ und erhalten

$$\sin \alpha = k/g \ (= \text{Gitterkonstante})$$

In der folgenden Tabelle sind die Werte $\sin \alpha$ bzw. $\alpha$ für die Beugungsmaxima 1. bis 4. und 10. Ordnung für den Fall angegeben, daß $\Lambda/2$ zwischen dem einfachen und dem 10 fachen Wert der Lichtwellenlänge $\lambda$ m liegt (g = 1... 10).

(Siehe Tabelle, Seite 5 f.)

Tabelle

| K \ g | 1 | 2 | 3 | 4 | ... | 10 |
|---|---|---|---|---|---|---|
| 1  $\sin\alpha$ / $\alpha$ | 1 / 90° | 2 | 3 | 4 | | 10 |
| 2  $\sin\alpha$ / $\alpha$ | 1/2 / 30° | 1 / 90° | 3/2 | 2 | | 5 |
| 3  $\sin\alpha$ / $\alpha$ | 1/3 / 19,5° | 2/3 / 42° | 1 / 90° | 4/3 | | 10/3 |
| 4  $\sin\alpha$ / $\alpha$ | 1/4 / 14,5° | 1/2 / 30° | 3/4 / 48,5° | 1 / 90° | | 5/2 |
| ... | | | | | | |
| 10  $\sin\alpha$ / $\alpha$ | 1/10 / 5,7° | 1/5 / 11,5° | 3/10 / 17,4° | 2/5 / 23,6° | | 1 / 90° |

Oberhalb der Hauptdiagonalen, die sich von links oben nach rechts unten erstreckt, liegen $\sin\alpha$-Werte, die größer 1 sind. Eine solche mathematische Unmöglichkeit besagt, daß in diesem Gebiet keine physikalische Realität vorliegt. Das erste Beugungsmaximum ($k = 1$) durchläuft für $1 \leqslant g \leqslant 10$ einen Winkelbereich von $5,7° \leqslant \alpha \leqslant 90°$. Für $g > \lambda$ tritt eine Überlappung mit dem Winkelbereich des zweiten Beugungsmaximums auf. Für den Fall, daß der Beugungswinkel des ersten Maximums zur Wiedergabe der aufgezeichneten Wellenlänge genutzt wird, ist, wie man der Tabelle entnimmt, eine eindeutige Zuordnung zwischen aufgezeichneter Wellenlänge und Beugungswinkel nur für Werte zwischen $1 \leqslant g \leqslant 2$ in einem Winkelbereich $30° \leqslant \alpha < 90°$ möglich. Dies entspricht einer aufgezeichneten Wellenlänge, die zwischen $2 \lambda$ m und $4 \lambda$ m liegt. D. h., daß bei einer Lichtwellenlänge von $\lambda$ m = 0,6 $\mu$m die aufgezeichnete Wellenlänge zwischen 1,2 und 2,4 $\mu$m liegen kann.

Mit zunehmender Ordnung der Beugungsmaxima k verschiebt sich der Bereich der eindeutigen Zuordnung zwischen Beugungswinkel und aufgezeichneter Wellenlänge längs der durch 90° gegebenen Hauptdiagonalen und der darunterliegenden parallelen Diagonalen zu größeren Werten von g. Man erkennt, daß mit dieser Verschiebung gleichzeitig eine Schrumpfung des Winkelbereiches und des abtastbaren Wellenlängenbereiches verbunden ist. Für $k = \alpha$ z. B. können aufgezeichnete Wellenlängen zwischen $\Lambda/\alpha = 2 \lambda$ m und $\Lambda/2 = 3 \lambda$ m in einem Winkelbereich von $42° \leqslant \alpha < 90°$ eindeutig abgetastet werden.

Basierend auf diesen grundsätzlichen Überlegungen für die Abtastung mit monochromatischem Licht sollen erfindungsgemäße Varianten der Umsetzung des Beugungswinkels in elektrische Signale beschrieben werden.

1. Erfindungsgemäß bringt man in dem für die Abtastung vorgesehenen Winkelbereich eine Reihe von Sensoren an, die nur dann ansprechen, wenn der abgebeugte Strahl sie trifft. Bevorzugt wird man als Sensoren optisch-elektrische Wandler einsetzen.

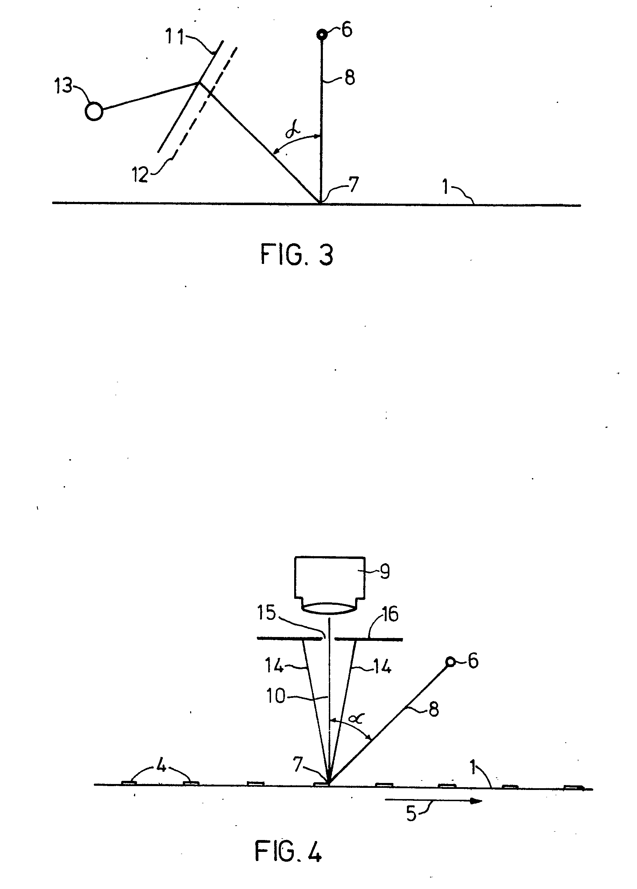

2. Die Abhängigkeit des Beugungswinkels von der aufgezeichneten Wellenlänge ($\alpha = f(\Lambda)$) wird in eine Abhängigkeit der Helligkeit H von der aufgezeichneten Wellenlänge transformiert $H = f(\Lambda)$. Abbildung 3 zeigt das Prinzip mit der bereits besprochenen Positionsvertauschung von Detektor und Lichtquelle. Die Bezeichnungen sind beibehalten. Der Detektor 9 besteht jetzt aus einer Sammellinse 11, einem Graukeil 12 und einem Fotoelement 13. Der abgebeugte Strahl 10 durchläuft den Graukeil 12. Durch eine vor oder nach dem Graukeil angebrachte Sammeloptik wird der Strahl 10 stets auf die gleiche Stelle, an der ein lichtempfindliches Element 13, bevorzugt ein optisch elektrischer Wandler sitzt, fokussiert.

Eine zusätzliche Informationsübertragung, die z. B. für Synchronisiersignale genutzt werden kann, ist mit einem der oben beschriebenen Systemen dadurch möglich, daß man die Intensität des monochromatischen Lichtstrahls nach einer vorgegebenen Funktion zeitlich variiert. Diese Funktion wird mit dem Verlauf des aufgezeichneten Signals, das die optische Beugung bewirkt, zeitlich gekoppelt. Das abgetastete Signal hängt dann von der Wellenlänge der Aufzeichnung und der Zeit ab. Eine Möglichkeit der Kopplung beider Funktionen besteht darin, daß die Intensitätsänderung des monochromatischen Signals durch Aufzeichnungen auf Magnetband gesteuert wird.

Eine weitere Möglichkeit der Informationsverarbeitung des vom Magnetband abgebeugten Strahles besteht darin, daß man ähnlich wie bei der Holographie vorgeht. Man ersetzt den monochromatischen Strahl durch einen kohärenten Laserstrahl. Von diesem wird ein Teilstrahl abgezweigt, der als Referenzstrahl für den vom Magnetband abgebeugten Strahl dient. Es ergeben sich Wellenfelder, die es gestatten, die Information zu entschlüsseln.

Bei einer anderen Methode arbeitet man mit einer spektralen Bestrahlung, z. B. mit weißem Licht $(0,4 ... 0,8 \, \mu m)$. Das abgebeugte Licht wird dann unter einem festen Winkel beobachtet. Auf diese Weise wird der auf dem Informationsträger aufgezeichneten Wellenlänge $\Lambda$ aus dem Spektrum eine Lichtwellenlänge $\lambda$ (Farbzerlegung) zugeordnet.

Die Abb. 4 demonstriert diesen Fall im einzelnen, wobei Darstellung und Bezeichnung an die Abbildung 2 angelehnt sind. Die Lichtquelle 6 wirft mit dem Strahl 8 weißes Licht auf die Gitterstäbe 4 beim Punkt 7. Die Dispersion an den Gitterstäben 4 hat ein Farbbündel 14 zur Folge. Durch einen Spalt 15 in einer Blende 16 der senkrecht über dem Punkt 7 liegt, wird aus dem Farbbündel 14 der Strahl 10 mit definierter Farbe aus geblendet. Hinter dem Spalt 15 befindet sich ein Detektor 9 (visuelle Beobachtung, foto-elektrisches Element) zur Auswertung der ausgeblendeten Farbe. Auf diese Weise wird der auf dem Informationsträger aufgezeichneten Wellenlänge $\Lambda$ aus dem Beugungsspektrum eine Lichtwellenlänge $\lambda$ (Farbzerlegung) zugeordnet.

$$\Lambda = f(\lambda)$$

Auch bei der voranstehenden Methode muß auf das Entstehen der Beugungen verschiedener Ordnungen geachtet werden. Es wird der Effekt wieder an einem Gitter mit der Gitterkonstanten $\Lambda/2$ beschrieben, das durch Aufzeichnung von Sinuswellen mit dem linearen Spalt eines Sprechkopfes gewonnen wurde. Es gilt

$$\sin \alpha = k \, \lambda/(\Lambda/2) = const$$

und

$$\Lambda = \alpha \, k \, \lambda/\sin \alpha$$

$\Lambda$ und $\lambda$ sind einander proportional.

Es müssen nun Beziehungen beachtet werden, welchen Wellenlängenbereich $\lambda_1 < \lambda < \lambda_2$ die abtastende Strahlung umfassen kann, damit unter dem konstanten Winkel $\alpha$ keine Signale des abgebeugten Lichtes eintreffen, die von aufeinanderfolgenden Beugungsordnungen herrühren. Dies würde bedeuten, daß die gleiche aufgezeichnete Wellenlänge $\Lambda$ nicht eindeutig einer bestimmten Wellenlänge des abgebeugten Lichtes zuzuordnen ist. Damit die gleiche Wellenlänge $\Lambda$ bei konstantem $\sin \alpha$ nicht durch benachbarte Beugungsmaxima wiedergegeben wird, muß gelten

$$\frac{2 \, k \, \lambda_2 < 2 \, (k + 1) \, \lambda_1}{\lambda_2 < \frac{k + 1}{k} \, \lambda_1} = (1 + 1) \, \lambda_1$$

Nutzt man das erste Beugungsmaximum so gilt :

$$\lambda_2 < 2 \, \lambda_1$$

Bei Nutzung der Beugung 1. Ordnung kann also nur ein Wellenlängenbereich genutzt werden, für den gilt :

$$\lambda_1 \leqslant \lambda < 2 \, \lambda_1$$

Einen solchen Wellenlängenbereich umfaßt gerade das sichtbare Licht, nämlich von $\lambda_1 = 0,4 \, \mu m$ $- \lambda_2 = 0,8 \, \mu m$ $(2 \, \lambda_1)$

Entsprechend lassen sich für $k = 1$ die aufgezeichneten Wellenlängen nur in einem Bereich abtasten, der durch

$$(2 \, \lambda_1/\sin \alpha) < \Lambda < (4 \, \lambda_1/\sin \alpha) \text{ gegeben ist.}$$

Durch Variation von $\sin \alpha$ läßt sich dieser Bereich zu größeren oder kleineren Werten von $\Lambda$ verschieben. Weil $\sin \alpha \leqslant 1$ ist, darf die auf auf Band aufgezeichnete Wellenlänge $\Lambda$ keine Werte annehmen, die unter der doppelten Lichtwellenlänge der unteren Grenze des Spektrums liegen. Daraus ergibt sich auch, daß sich mit steigender Ordnung des genutzten Beugungsbildes der für eine eindeutige Abtastung nutzbare Wellenlängenbereich immer mehr einengt.

Eine Möglichkeit der Umwandlung der Farbsignale in elektrische Signale besteht darin, daß man an der Stelle α = const. einen auf die Lichtwellenlänge ansprechenden Sensor anbringt. Hierzu ist z. B. ein Farbfilter geeignet, der die Farben mit verschiedener Intensität wiedergibt. Die Intensitäten werden dann durch einen optisch-elektrischen Wandler in elektrische Signale umgesetzt.

Dieses Verfahren eignet sich auch als Grundlage für die flächenhafte Wiedergabe von Farbbildern. Auf dem magnetischen Signalträger werden die den Farben entsprechenden magnetischen Wellenlängen entsprechend der Farbverteilung aufgesprochen. Durch Abtastung mit weißem Licht wird die Farbe wiedergegeben. Die Methode liefert den Ansatzpunkt für eine silberfreie direkte Farbbildwiedergabe, die nicht über die Umwandlung in elektrische Signale erfolgt.

Genau wie bei Verfahren mit monochromatischem Licht kann eine zweite Information übertragen werden, indem die Intensität der Lichtquelle entsprechend dieser zweiten Information gesteuert wird. Auf diese Weise kann die Helligkeit eines Punktes oder einer Fläche verändert werden.

Das erfindungsgemäße Verfahren wurde bisher für den Fall der Aufzeichnung von Sinuswellen besprochen. Erfindungsgemäß bietet es besondere Vorteile, mit einer Impulsaufzeichnung zu arbeiten. Bevorzugt wird dabei das magnetische Speichermaterial bis in die Sättigung oder darüber hinaus ausgesteuert. Die schärferen Übergänge zwischen antiparallelen Magnetisierungsrichtungen führen zu einer stärkeren Lokalisierung der Streufelder und damit der magnetischen Suspension über den Übergängen. Es tritt eine Verschärfung der Gitterkanten und damit der optischen Beugungsfigur ein. Bei dieser Art der Sättigungsaufzeichnung braucht nicht vom jungfräulichem Zustand der Magnetschicht ausgegangen zu werden. Die Schicht kann in einer Richtung gesättigt sein. Dieser Zustand läßt sich leicht durch einen Permanentmagneten herbeiführen. Im weiteren werden die bisher im prinzipiellen beschriebenen erfindungsgemäßen Verfahren im Detail erläutert und zwar verschiedene Verfahren der Niederlegung und der Entwicklung der Information und verschieden aufgebauter Informationsträger.

Die Niederlegung der Information kann mit einem klassischen Ringkopf erfolgen. Bei geeigneten Aufzeichnungsmaterialien kann auch mit einem Spezialkopf für Senkrechtmagnetisierung oder mit einem Licht- bzw. Laserstrahl aufgezeichnet werden. Im letzten Fall erwärmt der stark gebündelte Strahl mit einem Querschnitt bis herab zu 1 $\mu m^2$ definierte Stellen über den Curiepunkt (für $CrO_2$ beträgt der Curiepunkt 116 °C) und läßt dort die Magnetisierungsrichtung umschlagen. Diese Methode eignet sich besonders, wenn von Punktstrukturen Beugungsbilder angefertigt werden sollen.

Die Überführung der nach einem der angegebenen Verfahren aufgezeichneten Information in ein Beugungsgitter kann ebenfalls auf verschiedene Weise erfolgen. Je nach dem angewandten Verfahren entstehen dabei Reflexions- oder Transmissionsgitter. Es stehen folgende Verfahren zur Verfügung :

a) Aufgießen einer Suspension mit weichmagnetischen Teilchen mit einer Größe von ca. 0,02 $\mu m$ auf das besprochene hartmagnetische Speichermaterial. Nach dem Verdunsten der Flüssigkeit ist ein Reflexionsgitter entstanden. Auf eine solche Anordnung kann zur Erhöhung der Haltbarkeit zusätzlich ein transparenter Lack aufgesprüht oder aufgegossen werden. Je nachdem, ob das Grundmaterial wieder verwendet werden soll, oder ob eine unlöschbare Aufzeichnung hergestellt werden soll, wird man einen löslichen oder einen unlöslichen Lack verwendet.

b) Nach einem anderen Verfahren zur Herstellung eines Reflexionsgitters befindet sich auf der hartmagnetischen Speicherschicht eine feste dünne Oberschicht, (0,5-2 $\mu m$ dick), bei der weichmagnetische Teilchen in einen Binder eingebettet sind. Nach oder noch während der Aufsprache wird die Oberschicht durch Lösemittel oder Wärme in den flüssigen Zustand versetzt, so daß sich die weichmagnetischen Teilchen entsprechend der in der hartmagnetischen Schicht aufgezeichneten Information verteilen können.

c) Nach einem weiteren Verfahren werden die in der Oberfläche liegenden Pigmentteilchen des Aufzeichnungsmaterials selbst, das aus hartmagnetischen Teilchen und einem löslichen Lack besteht, zur Gitterbildung genutzt. Beim Anlösen der Oberfläche während oder nach der Aufsprache führen die Ansammlungen der Oberflächenteilchen in den Streufeldern durch Verformung der Oberfläche zu einem Gitter. Zur Erzeugung starker Streufelder und damit scharfer Gitter zeichnet man vorzugsweise Rechteckimpulse auf ein Material auf, das ein Koerzitivfeld über 450 Oe und einen $B_r/B_s$-Wert größer als 0,80 besitzt. Als hartmagnetische Pigmente kommen vorzugsweise Low-Noise-Pigmente, kubisches $\gamma$-$Fe_2O_3$ und Metallpulverpigmente mit Teilchengrößen, die denen der Ferrofluidlösungen entsprechen, zur Anwendung. An Stelle des löslichen Lackes kann auch eine Substanz verwendet werden, die durch Wärme bevorzugt zwischen 40 und 80 °C flüssig wird. Hierzu gehören besonders Wachse, wie Paraffin.

d) Schließlich kann das im Stand der Technik beschriebene Verfahren zur Herstellung von unlöschbaren Bändern zur Erzeugung von Reflexions- und Transmissionsgittern genutzt werden. Dabei wird auf die magnetische Aufzeichnung eine Suspension mit magnetischen Teilchen aufgebracht. Im Gegensatz zu DE-B 15 22 965 können dabei nicht nur hartmagnetische, sondern auch weichmagnetische Teilchen ähnlich denen von Ferrofluid zum Einsatz kommen. Nach dem Eintrocknen der Suspension wird eine unmagnetische transparente oder nichttransparente Rückschicht zur Erzeugung eines Transmissionsgitters bzw. Reflexionsgitters aufgegossen oder aufkaschiert und dann zusammen mit der Gitterschicht vom Original abgezogen.

Die nach den verschiedenen Verfahren hergestellten Informationsträger besitzen die Eigenschaft, daß bei Löschung der magnetischen Information die optische Information in Form des Beugungsgitters erhalten bleibt. Nach der Löschung dieser ursprünglich zur Gitterbildung dienenden Information ist es im allgemeinen möglich, eine andere Information auf den hartmagnetischen Träger aufzuzeichnen. Diese Möglichkeit entfällt nur dann, wenn das Beugungsgitter nach dem Verfahren (d) mit weichmagnetischen Teilchen hergestellt wurde.

Zur Durchführung der erfindungsgemäßen Verfahren können alle für dynamische magnetische Speicherung geeigneten Materialien zur Anwendung kommen. Hierzu gehören Speichermaterialien, die aus einem Pigment ($\gamma$-$Fe_2O_3$, $CrO_2$, Bariumferrit, Metallpulver) und Bindelack bestehen. Speziell kann das Pigment in einen lösbaren Lack oder in Wachs, das in der Wärme flüssig wird, eingebettet sein. Hierzu gehören auch Schichtsysteme mit abwechselnden magnetischen und unmagnetischen Schichten und homogene magnetische Metallschichten. Alle Speichermaterialtypen können isotrop oder anisotrop sein, wobei bei den anisotropen Materialien die magnetischen Vorzugsachsen vorzugsweise in Aufzeichnungsrichtung oder senkrecht zur Oberfläche liegen. Hartmagnetische Trägermaterialien obiger Zusammensetzung können eingesetzt werden, auf denen eine feste Schicht aus einem Binder und weichmagnetischen Teilchen mit der Größe von ca. 0,02 µm aufgebracht ist.

Beispiel

Ein übliches 1/2″ (12,7 mm)-Amateur-Band wird auf einem Videorecorder vom Typ VHS mit einfachen Schwarz-Weiß-Testbildern besprochen. Bei dieser Aufzeichnung ist der Spalt des Aufzeichnungskopfes bei benachbarten Spuren um einen Winkel von ± 7° gegenüber der Lage senkrecht zur Spur verdreht. Die Testbilder wurden mit einem Videotestbildgenerator erzeugt.

Diese Aufzeichnung wird mit einer Suspension feinster weichmagnetischer Teilchen aus Magnetit mit Teilchengröße von 0,02 µm (Ferrofluide der Firma Klaus Schäfer) mit einer Dicke überzogen, die der Größenordnung einiger Lichtwellenlängen entspricht. Das Eintreten dieser Dicke erkennt man an dem Auftreten von Interferenzfarben. Der nicht durch die Aufzeichnung gebundene Teil der Pigmentteilchen wird durch Abspülen mit Wasser entfernt.

Das so präparierte Videoband wird mit einer Geschwindigkeit von etwa 5 cm/s über den Objektisch eines normalen Mikroskopes bei einer Vergrößerung zwischen 30- und 100 fach gezogen und mit dem weißen Licht einer Mikroskopierlampe so beleuchtet, daß die senkrechte Projektion des Lichtstrahles in die Bandebene senkrecht zur Lage des Kopfspaltes und damit senkrecht zum Beugungsgitter verläuft. Da bei benachbarten Spuren der Kopfspalt um + 7° bzw. − 7° gegenüber der Lage senkrecht zur Spur verdreht ist, läßt sich diese Bedingung jeweils nur für jede zweite Spur erfüllen.

Bei konstantem Winkel $\alpha$, der zwischen 45° und nahezu 90° gewählt wurde, können dann beim Lauf des Bandes über den Objekttisch entsprechend dem Wechsel der aufgezeichneten Wellenlängen wechselnde Farben beobachtet werden. Die Wellenlängen $\Lambda$ des Schwarz-Weiß-Bildes werden entsprechend der Beziehung

$$\lambda = (\sin \alpha \ \Lambda/2 \ k) = c \ \Lambda$$

in Farbsignale der Wellenlänge $\lambda$ umgesetzt. Dadurch ist eine strenge Proportionalität zwischen Lichtwellenlänge (Farbe) und der magnetischen Wellenlänge, die auf dem Informationsträger niedergelegt ist, gegeben. Damit liegt die Voraussetzung vor, um von einer magnetisch fixierten Aufzeichnung direkt ein optisches Bild zu gewinnen.

**Ansprüche**

1. Magnetooptisches Aufzeichnungs- und Wiedergabeverfahren für bewegte Informationsträger gekennzeichnet durch
   a) Besprechen eines magnetisierbaren Informationsträgers in Form eines bewesten Bandes, einer Platte oder Walze mit Informationsbereichen, die in Bewegungsrichtung größer als 0,2 und kleiner als 20 µm sind.
   b) Geometrische Strukturerzeugung durch Einwirkung der zur aufgezeichneten Informationgehörigen Magnetfelder auf Teilchen, deren größte Längsausdehnung kleiner als 0,1 µm vorzugsweise 0,02 µm ist.
   c) Optische Abtastung dieser Strukturen, indem Licht von 0,38 bis 0,8 µm Wellenlänge an der Oberfläche des bewegten Informationsträgers gebeugt wird und Beugungsbilder entstehen, die zur Auswertung der Information dienen.

2. Magnetooptisches Aufzeichnungs- und Wiedergabeverfahren nach Anspruch 1 dadurch gekennzeichnet, daß der zur Durchführung des Verfahrens benutzte Informationsträger eine Schicht enthält, die ein magnetisches Pigment besitzt, das in einen Binder eingebettet ist, der durch chemische oder thermische Einwirkung vorübergehend in den flüssigen Zustand versetzt werden kann, wobei der Volumenfüllfaktor der Schicht unter 0,25 liegt und die Schichtdicke ≤ 2 µm beträgt.

3. Magnetooptisches Aufzeichnungs- und Wiedergabeverfahren nach Anspruch 2 dadurch gekennzeichnet, daß das Pigment aus isometrischen Teilchen besteht.

4. Magnetooptisches Aufzeichnungs- und Wiedergabeverfahren nach Anspruch 2 und 3 dadurch gekennzeichnet, daß der Aufzeichnungsträger ein Pigment besitzt, dessen Koerzitivfeld über 24 kAm$^{-1}$ liegt.

5. Magnetooptisches Aufzeichnungs- und Wiedergabeverfahren gemäß Anspruch 1-4 dadurch gekennzeichnet, daß die magnetische Aufzeichnung und die Bildung des Beugungsgitters mit der gleichen Schicht erfolgen.

6. Magnetooptisches Aufzeichnungs- und Wiedergabeverfahren nach Anspruch 2 und 3 dadurch gekennzeichnet, daß der Aufzeichnungsträger ein weichmagnetisches Pigment besitzt mit einem Koerzitivfeld, das kleiner 4 Acm$^{-1}$ ist.

7. Magnetooptisches Aufzeichnungs- und Wiedergabeverfahren gemäß Anspruch 1 und 6 dadurch gekennzeichnet, daß die magnetische Aufzeichnung und Bildung des Beugungsgitters gleichzeitig in der gleichen Schicht erfolgen.

8. Magnetooptisches Aufzeichnungs- und Wiedergabeverfahren nach den Ansprüchen 1, 3, 4, 6 and 7 dadurch gekennzeichnet, daß das Substrat des Informationsträgers lichtdurchlässig ist, so daß bei der Herstellung des Beugungsgitters ein Transmissionsgitter entsteht.

9. Magnetooptisches Aufzeichnungs- und Wiedergabeverfahren nach den Ansprüchen 1, 3, 4, 7 dadurch gekennzeichnet, daß das Substrat des Informationsträgers lichtundurchlässig ist, so daß bei der Herstellung des Beugungsgitters ein Reflexionsgitter entsteht.

10. Magnetooptisches Aufzeichnungs- und Wiedergabeverfahren nach Anspruch 1 dadurch gekennzeichnet, daß der Informationsträger auf ein Substrat zwei magnetische Schichten enthält, wobei die für die Aufnahme der magnetischen Information dienende Unterschicht, die als Pigment- oder Metallschicht ausgebildet sein kann, eine Schichtdicke kleiner 10 μm und ein Koerzitivfeld größer 8 kAm$^{-1}$ besitzt, und wobei die Oberschicht, die zur Erzeugung der Beugungsstrukturen durch die Streufelder der Unterschicht in den flüssigen Zustand versetzt wird extrem weichmagnetische Pigmentteilchen enthält und das Koerzitivfeld unter 4 Acm$^{-1}$ liegt.

11. Magnetooptisches Aufzeichnungs- und Wiedergabeverfahren nach Anspruch 10 dadurch gekennzeichnet, daß die untere Informationsschicht eine magnetische Vorzugsachse senkrecht zur Schichtoberfläche besitzt.

12. Magnetooptisches Aufzeichnungs- und Wiedergabeverfahren nach Anspruch 11 dadurch gekennzeichnet, daß als Pigment $CrO_2$ für die Unterschicht verwendet wird.

13. Magnetooptisches Aufzeichnungs- und Wiedergabeverfahren nach Anspruch 5 dadurch gekennzeichnet, daß die untere Informationsschicht aus einer homogenen metallisch-magnetischen Schicht besteht, deren Hauptbestandteil Kobalt ist.

14. Magnetooptisches Aufzeichnungs- und Wiedergabeverfahren nach Anspruch 1 dadurch gekennzeichnet, daß die Aufzeichnung mit einem linearen Spalt erfolgt, so daß lineare Beugungsgitter entstehen.

15. Magnetooptisches Aufzeichnungs- und Wiedergabeverfahren nach Anspruch 1-4, 6, 8, 9 gekennzeichnet, daß die Aufzeichnung auf einen Informationsträger thermomagnetisch durch Erwärmung über die Blocking- bzw. Curietemperatur erfolgt.

16. Magnetooptisches Aufzeichnungs- und Wiedergabeverfahren nach Anspruch 15 dadurch gekennzeichnet, daß ein Strahl, bevorzugt ein Laserstrahl, zur Aufzeichnung verwendet wird.

17. Magnetooptisches Aufzeichnungs- und Wiedergabeverfahren nach den Ansprüchen 1, 15 und 16 dadurch gekennzeichnet, daß der Informationsträger in einer Richtung vormagnetisiert ist.

18. Magnetooptisches Aufzeichnungs- und Wiedergabeverfahren nach Anspruch 1 dadurch gekennzeichnet, daß die Aufzeichnung auf den magnetischen Informationsträger nach dem binären Verfahren mit positiver zu negativer Sättigung erfolgt.

19. Magnetooptisches Aufzeichnungs- und Wiedergabeverfahren nach Anspruch 1 dadurch gekennzeichnet, daß auf einen magnetischen Informationsträger eine Aufzeichnung aufgebracht wird, die anschließend mit einer Lösung von kleinen strukturbildenden magnetisierbaren Teilchen beaufschlagt wird.

20. Magnetooptisches Aufzeichnungs- und Wiedergabeverfahren nach Anspruch 19 dadurch gekennzeichnet, daß die durch die Teilchen gebildeten Strukturen durch eine Badbehandlung oder durch Aufsprühen mit einem löslichen oder unlöslichen filmbildenden Mittel fixiert werden.

21. Magnetooptisches Aufzeichnungs- und Wiedergabeverfahren nach Anspruch 1, dadurch gekennzeichnet, daß nach der Herstellung der für die Beugung erforderlichen magnetischen Strukturanordnung die magnetische Information wieder gelöscht wird und eine neue andere Information aufgesprochen wird und die dadurch entstandenen Streufelder magnetisch abgetastet werden.

22. Magnetooptisches Aufzeichnungs- und Wiedergabeverfahren nach Anspruch 1 dadurch gekennzeichnet, daß als Informationsträger ein Material verwendet wird, bestehend aus einem eine Originalaufzeichnung tragenden magnetisierten Träger, auf dem bewegliche magnetisierbare Teilchen entsprechend dem Streufeld der Originalaufzeichnung räumlich mit unterschiedlicher Dichte angeordnet sind und anschließend die entstandene Schicht von dem die Originalaufzeichnung tragenden Träger abgezogen wird.

23. Magnetooptisches Aufzeichnungs- und Wiedergabeverfahren nach Anspruch 1 dadurch gekennzeichnet, daß die Abtastung der Beugungsgitter mit monochromatischem Licht, insbesondere mit einem Laserstrahl, erfolgt.

9

24. Magnetooptisches Aufzeichnungs- und Wiedergabeverfahren nach Anspruch 23 dadurch gekennzeichnet, daß bei der Abtastung der Beugungswinkel durch lichtempfindliche Elemente, insbesondere durch optisch-elektrische Wandler, die im Schwenkbereich des Winkel des gebeugten Lichtes liegen, ermittelt wird.

25. Magnetooptisches Aufzeichnungs- und Wiedergabeverfahren nach Anspruch 23 dadurch gekennzeichnet, daß bei der Abtastung der abgebeugte Lichtstrahl durch ein optisches System auf einen Punkt bzw. eine Linie fokussiert wird, an dem bzw. an der ein lichtempfindliches Element sitzt und daß sich ein Graukeil vor dem lichtempfindlichen Element befindet, der dafür sorgt, daß den verschiedenen Winkeln verschiedene Helligkeitswerte zugeordnet werden.

26. Magnetooptisches Aufzeichnungs- und Wiedergabeverfahren nach Anspruch 23 dadurch gekennzeichnet, daß bei der Abtastung für den genutzten Beugungswinkel gilt : $30° \leqslant \alpha < 90°$ und die aufgezeichnete Wellenlänge zwischen dem doppelten und dem vierfachen Wert der Wellenlänge $\lambda$ m des monochromatischen Lichtes liegt.

27. Magnetooptisches Aufzeichnungs- und Wiedergabeverfahren nach Anspruch 23 dadurch gekennzeichnet, daß bei der Abtastung die monochromatische Lichtquelle in der Helligkeit mit einer zusätzlichen Information gesteuert wird und daß die so erzeugte Modulation bei der Abtastung mit verwendet wird.

28. Magnetooptisches Aufzeichnungs- und Wiedergabeverfahren nach Anspruch 1 dadurch gekennzeichnet, daß bei der Abtastung die Beugungsstrukturen mit breitbandigem spektralen Licht, bevorzugt weißem Licht, unter einem festen Winkel bestrahlt werden und daß die abgebeugte Wellenlänge unter einem festen Winkel abgetastet wird.

29. Magnetooptisches Aufzeichnungs- und Wiedergabeverfahren nach Anspruch 28 dadurch gekennzeichnet, daß bei Verwendung von weißem Licht zwischen der Lichtwellenlänge und der magnetischen Wellenlänge, die auf dem Informationsträger niedergelegt ist, Proportionalität besteht.

30. Magnetooptisches Aufzeichnungs- und Wiedergabeverfahren nach Anspruch 23 und 28 dadurch gekennzeichnet, daß bei der Abtastung mit monochromatischem oder weißem Licht nur die zum ersten Beugungsmaximum gehörenden gebeugten Wellenlängen für die Wiedergabe genutzt werden.

31. Magnetooptisches Aufzeichnungs- und Wiedergabeverfahren nach Anspruch 29 dadurch gekennzeichnet, daß die obere Wellenlänge $\lambda_2$ des zur Abtastung genutzten Wellenlängenbereiches gleich dem doppelten Wert der unteren Wellenlänge $\lambda_1$ dieses Bereiches ist.

32. Magnetooptisches Aufzeichnungs- und Wiedergabeverfahren nach Anspruch 30 dadurch gekennzeichnet, daß das zur Abtastung benutzte Licht Wellenlängen besitzt, die zwischen 0,4 $\mu$m und 0,8 $\mu$m liegen, und die aufgezeichnete Wellenlänge Werte besitzt, die zwischen $\Lambda = (2 \cdot 0,4/\sin\alpha)$ $\mu$m und $\Lambda = (2 \cdot 0,8/\sin\alpha)$ $\mu$m liegen ($\alpha$ = benutzter Beugungswinkel).

33. Magnetooptisches Aufzeichnungs- und Wiedergabeverfahren nach den Ansprüchen 1, 28, 30-32 dadurch gekennzeichnet, daß ein Sensor verwendet wird, der auf die Lichtwellenlänge des gebeugten Lichtes anspricht.

34. Magnetooptisches Aufzeichnungs- und Wiedergabeverfahren nach Anspruch 28 dadurch gekennzeichnet, daß ein Filter verwendet wird, das die abgetasteten Farben mit verschiedener Intensität wiedergibt und daß diese Intensität durch einen optoelektrischen Wandler in ein elektrisches Signal umgesetzt wird.

35. Magnetooptisches Aufzeichnungs- und Wiedergabeverfahren nach Anspruch 30 dadurch gekennzeichnet, daß Intensitätsschwankungen der Lichtquelle zur Übermittlung einer zusätzlichen Information genutzt werden.

**Claims**

1. Magneto-optical recording and playback process for travelling information carriers, characterised by

a) recording information areas on a magnetizable information carrier in the form of a moving tape, disc or roller, which information areas are greater than 0.2 and smaller than 20 $\mu$m in the direction of movement ;

b) production of a geometrical structure by the action of the magnetic fields belonging to the recorded information on particles whose greatest longitudinal dimension is less than 0.1 $\mu$m, preferably 0.02 $\mu$m ;

c) optical scanning of these structures, by which light of wavelength 0.38 to 0.8 $\mu$m is diffracted on the surface of the moving information carrier and diffraction images are produced which serve for interpretation of the information.

2. Magneto-optical recording and playback process according to claim 1, characterised in that the information carrier used for carrying out the process contains a layer having a magnetic pigment embedded in a binder which can be temporarily converted into the liquid state by chemical or thermal action, the volume filling factor of said layer being less than 0.25 and the thickness of the layer $\leqslant 2$ $\mu$m.

3. Magneto-optical recording and playback process according to claim 2, characterised in that the pigment consists of isometric particles.

4. Magneto-optical recording and playback process according to claims 2 and 3, characterised in that the recording carrier contains a pigment having a coercive field greater than 24 kAm$^{-1}$.

5. Magneto-optical recording and playback process according to claims 1 to 4, characterised in that the magnetic recording and the formation of the diffraction grid are achieved with the same layer.

6. Magneto-optical recording and playback process according to claims 2 and 3, characterised in that the recording carrier has a soft magnetic pigment with a coercive field less than 4 Acm$^{-1}$.

7. Magneto-optical recording and playback process according to claims 1 and 6, characterised in that magnetic recording and formation of the diffraction grid takes place simultaneously in the same layer.

8. Magneto-optical recording and playback process according to claims 1, 3, 4, 6, 7, characterised in that the substrate of the information carrier is permeable to light so that production of the diffraction grid is accompanied by the formation of a transmission grid.

9. Magneto-optical recording and playback process according to claims 1, 3, 4, 7 characterised in that the substrate of the information carrier is impermeable to light so that production of the diffraction grid is accompanied by the formation of a reflection grid.

10. Magneto-optical recording and playback process according to claim 1, characterised in that the information carrier contains two magnetic layers on a substrate, the lower layer, which is used for receiving the magnetic information and may be a layer of pigment or metal, having a layer thickness less than 10 μm and a coercive field greater than 8 kAm$^{-1}$ and the upper layer, which is converted into the liquid state for production of the diffraction structures by the leakage fields of the lower layer, containing extremely soft magnetic pigment particles, the coercive field being below 4 Acm$^{-1}$.

11. Magneto-optical recording and playback process according to claim 10, characterised in that the lower information layer has a magnetically preferred axis perpendicular to the surface of the layer.

12. Magneto-optical recording and playback process according to claim 11, characterised in that CrO$_2$ is used as pigment for the lower layer.

13. Magneto-optical recording and playback process according to claim 5, characterised in that the lower information layer consists of a homogeneous metallic magnetic layer having cobalt as its main constituent.

14. Magneto-optical recording and playback process according to claim 1, characterised in that recording is carried out using a linear gap so that linear diffraction grids are formed.

15. Magneto-optical recording and playback process according to claims 1-4, 6, 8 and 9, characterised in that recording on an information carrier takes place thermomagnetically by heating above the blocking or Curie temperature.

16. Magneto-optical recording and playback process according to claim 15, characterised in that a beam, preferably a laser beam, is used for recording.

17. Magneto-optical recording and playback process according to claims 1, 15 and 16, characterised in that the information carrier is premagnetised in one direction.

18. Magneto-optical recording and playback process according to claim 1, characterised in that recording on the magnetic information carrier is carried out by a binary process with positive to negative saturation.

19. Magneto-optical recording and playback process according to claim 1, characterised in that a recording is applied to a magnetic information carrier and is subsequently subjected to a solution of small magnetisable particles which form a structure.

20. Magneto-optical recording and playback process according to claim 19, characterised in that the structures formed by the particles are fixed by treatment using a bath or by being sprayed with a soluble or insoluble film forming substance.

21. Magneto-optical recording and playback process according to claim 1, characterised in that after production of the magnetic structural arrangement necessary for diffraction, the magnetic information is erased and fresh information is recorded, and the leakage fields thereby produced are magnetically scanned.

22. Magneto-optical recording and playback process according to claim 1, characterised in that the information carrier used is a material consisting of a magnetic carrier carrying an original recording, on which carrier movable magnetizable particles are arranged in space at different densities according to the leakage field of the original recording and the resulting layer is subsequently stripped from the carrier which carries the original recording.

23. Magneto-optical recording and playback process according to claim 1, characterised in that scanning of the diffraction grid is carried out using monochromatic light, in particular, a laser beam.

24. Magneto-optical recording and playback process according to claim 23, characterised in that when scanning is carried out, the angle of diffraction is determined by light-sensitive elements, in particular by optico-electrical transducers situated in the transverse range of the angle of the diffracted light.

25. Magneto-optical recording and playback process according to claim 23 characterised in that in the process of scanning, the diffracted light beam is focussed by an optical system on a point or a line on or at which is situated a light-sensitive element, and in that a neutral wedge is situated in front of the lightsensitive element, whereby different brightness values are associated with the various angles.

26. Magneto-optical recording and playback process according to claim 23, characterised in that the angle of diffraction used in scanning lies in the following range : $30° \leqslant \alpha < 90°$, and the recorded wavelength is between twice and four times the value of the wavelength $\lambda$ m of the monochromatic light.

27. Magneto-optical recording and playback process according to claim 23, characterised in that during scanning, the brightness of the monochromatic source of light is controlled by additional information and that the resulting modulation is also used in the process of scanning.

28. Magneto-optical recording and playback process according to claim 1, characterised in that in the process of scanning, the diffraction structures are exposed to a wide band of spectral light, preferably white light, at a fixed angle and in that the diffraction wavelength is scanned at a fixed angle.

29. Magneto-optical recording and playback process according to claim 28, characterised in that when white light is used, proportionality exists between the wavelength of light and the magnetic wavelength laid down on the information carrier.

30. Magneto-optical recording and playback process according to claims 23 and 28, characterised in that when scanning is carried out with monochromatic or white light, only those diffracted wavelengths belonging to the first diffraction maximum are used for playback.

31. Magneto-optical recording and playback process according to claim 29, characterised in that the upper wavelength $\lambda_2$ of the wavelength range used for scanning is equal to twice the value of the lower wavelength $\lambda_1$ of this range.

32. Magneto-optical recording and playback process according to claim 30, characterised in that the light used for scanning has wavelengths in the range of from $0.4\,\mu m$ to $0.8\,\mu m$ and the recorded wavelength has values in the range of from $\Lambda = (2 \cdot 0.4/\sin\alpha)\,\mu m$ to $\Lambda = (2 \cdot 0.8/\sin\alpha)\,\mu m$ ($\alpha$ = angle of diffraction used).

33. Magneto-optical recording and playback process according to claims 1, 28 and 30-32, characterised in that a sensor which responds to the wavelength of the diffracted light is used.

34. Magneto-optical recording and playback process according to claim 28, characterised in that a filter which reproduces the scanned colours at a different intensity is used and in that the intensity is converted into an electric signal by an optico-electrical transducer.

35. Magneto-optical recording and playback process according to claim 30, characterised in that intensity fluctuations of the source of light are used for transmitting additional information.

## Revendications

1. Procédé magnétooptique d'enregistrement et de lecture sur supports d'information mobiles, ledit procédé étant caractérisé par les phases suivantes :

a) enregistrement sur un support d'information magnétique, constitué par une bande mobile, un disque ou un cylindre avec des plages d'information dont la dimension suivant le sens de déplacement est supérieure à 0,2 et inférieure à 20 $\mu m$ ;

b) production de structures géométriques par action des champs magnétiques produits par l'information enregistrée sur des particules dont la longueur maximale est inférieure à 0,1 $\mu m$, et de préférence à 0,02 $\mu m$ ; et

c) lecture optique de ces structures, une lumière de longueur d'onde comprise entre 0,38 et 0,8 $\mu m$ étant diffractée sur la surface du support d'information mobile, avec production de figures de diffraction servant à l'interprétation de l'information.

2. Procédé magnétooptique d'enregistrement et de lecture selon revendication 1, caractérisé en ce que le support d'information utilisé pour la mise en œuvre du procédé comporte une couche avec un pigment magnétique enrobé dans un liant qu'une action chimique ou thermique peut faire temporairement passer dans l'état liquide, le facteur de remplissage volumique de la couche étant inférieur à 0,25 et l'épaisseur de la couche $\leqslant 2\,\mu m$.

3. Procédé magnétooptique d'enregistrement et de lecture selon revendication 2, caractérisé en ce que le pigment est constitué par des particules isométriques.

4. Procédé magnétooptique d'enregistrement et de lecture selon revendications 2 et 3, caractérisé en ce que le support d'enregistrement comprend un pigment dont le champ coercitif est supérieur à 24 kAm$^{-1}$.

5. Procédé magnétooptique d'enregistrement et de lecture selon revendications 1 à 4, caractérisé en ce que l'enregistrement magnétique et la production du réseau de diffraction s'effectuent avec la même couche.

6. Procédé magnétooptique d'enregistrement et de lecture selon revendications 2 et 3, caractérisé en ce que le support d'enregistrement comprend un pigment magnétiquement doux, avec un champ coercitif inférieur à 4 Acm$^{-1}$.

7. Procédé magnétooptique d'enregistrement et de lecture selon revendications 1 et 6, caractérisé en ce qye l'enregistrement magnétique et la production du réseau de diffraction s'effectuent simultanément dans la même couche.

8. Procédé magnétooptique d'enregistrement et de lecture selon revendications 1, 3, 4, 6, 7,

**0 060 477**

caractérisé en ce que le substrat du support d'information est transparent, de sorte qu'un réseau de transmission est obtenu lors de la production du réseau de diffraction.

9. Procédé magnétooptique d'enregistrement et de lecture selon revendications 1, 3, 4, 7, caractérisé en ce que le substrat du support d'information est opaque, de sorte qu'un réseau de réflexion est obtenu lors de la production du réseau de diffraction.

10. Procédé magnétooptique d'enregistrement et de lecture selon revendication 1, caractérisé en ce que le support d'information comprend sur un substrat deux couches magnétiques, dont la couche inférieure servant à l'enregistrement de l'information magnétique peut être constitué par une couche de pigment ou métallique et présente une épaisseur inférieure à 10 $\mu$m et un champ coercitif supérieur à 8 kAm$^{-1}$, et dont la couche supérieure, passe dans l'état liquide pour la production des structures de diffraction par les champs de dispersion de la couche inférieure, contient des particules de pigment magnétiquement très douces et présente un champ coercitif inférieur à 4 Acm$^{-1}$.

11. Procédé magnétooptique d'enregistrement et de lecture selon revendication 10, caractérisé en ce que la couche inférieure d'information présente un axe magnétique préférentiel perpendiculaire à la surface de la couche.

12. Procédé magnétooptique d'enregistrement et de lecture selon revendication 11, caractérisé par l'emploi de CrO$_2$ comme pigment pour la couche inférieure.

13. Procédé magnétooptique d'enregistrement et de lecture selon revendication 5, caractérisé en ce que la couche inférieure d'information est constituée par une couche métallique magnétique homogène, dont le constituant essentiel est du cobalt.

14. Procédé magnétooptique d'enregistrement et de lecture selon revendication 1, caractérisé en ce que l'enregistrement s'effectue à l'aide d'un entrefer linéaire, de sorte que des réseaux de diffraction linéaires sont produits.

15. Procédé magnétooptique d'enregistrement et de lecture selon revendications 1 à 4, 6, 8, 9, caractérisé en ce que l'enregistrement s'effectue thermomagnétiquement sur un support d'information, par chauffage au-delà de la température de Curie.

16. Procédé magnétooptique d'enregistrement et de lecture selon revendication 15, caractérisé par l'emploi d'un faisceau, et de préférence d'un faisceau laser, pour l'enregistrement.

17. Procédé magnétooptique d'enregistrement et de lecture selon revendications 1, 15 et 16, caractérisé par la préaimantation du support d'information dans un sens.

18. Procédé magnétooptique d'enregistrement et de lecture selon revendication 1, caractérisé en ce que l'enregistrement s'effectue sur le support magnétique d'information selon le procédé binaire entre les saturations positive et négative.

19. Procédé magnétooptique d'enregistrement et de lecture selon revendication 1, caractérisé en ce qu'un enregistrement est déposé sur un support d'information magnétique, puis recouvert par une solution de petites particules magnétiques produisant des structures.

20. Procédé magnétooptique d'enregistrement et de lecture selon revendication 19, caractérisé en ce que les structures produites par les particules sont fixées par un traitement au bain ou par pulvérisation d'un produit filmogène soluble ou non.

21. Procédé magnétooptique d'enregistrement et de lecture selon revendication 1, caractérisé en ce qu'après la production des structures magnétiques nécessaires pour la diffraction, l'information magnétique est de nouveau effacée, une nouvelle information différente est enregistrée et les champs de dispersion ainsi produits sont lus magnétiquement.

22. Procédé magnétooptique d'enregistrement et de lecture selon revendication 1, caractérisé en ce que le support d'information utilisé est un matériau constitué par un support aimanté portant l'enregistrement original et sur lequel des particules aimantables mobiles sont disposées avec une densité spatiale variable selon le champ de dispersion de l'enregistrement original, puis la couche obtenue est retirée du support portant l'enregistrement original.

23. Procédé magnétooptique d'enregistrement et de lecture selon revendication 1, caractérisé en ce que la lecture des réseaux de diffraction s'effectue en lumière monochromatique, et en particulier à l'aide d'un faisceau laser.

24. Procédé magnétooptique d'enregistrement et de lecture selon revendication 23, caractérisé en ce que l'angle de diffraction est déterminé lors de la lecture par des éléments photosensibles, et en particulier des convertisseurs optoélectriques, situés sur la plage de l'angle de la lumière diffractée.

25. Procédé magnétooptique d'enregistrement et de lecture selon revendication 23, caractérisé en ce que le faisceau lumineux diffracté est focalisé par un système optique sur un point ou une droite, où se trouve un élément photosensible ; et un coin photométrique disposé avant l'élément photosensible affecté des valeurs différentes de luminosité aux divers angles.

26. Procédé magnétooptique d'enregistrement et de lecture selon revendication 23, caractérisé en ce que l'angle de diffraction utilisé pour la lecture est : $30° \leqslant \alpha < 90°$ ; et la longueur d'onde enregistrée est comprise entre le double et le quadruple de la longueur d'onde $\lambda$m de la lumière monochromatique.

27. Procédé magnétooptique d'enregistrement et de lecture selon revendication 23, caractérisé en ce que la luminosité de la source de lumière monochromatique est commandée par la lecture par une information supplémentaire ; et la modulation ainsi produite est utilisée pour la lecture.

28. Procédé magnétooptique d'enregistrement et de lecture selon revendication 1, caractérisé en ce

13

que les structures de diffraction sont irradiées pendant la lecture par de la lumière spectrale à large bande, et de préférence de la lumière blanche, sous un angle fixe ; et la longueur d'onde diffractée est lue sous un angle fixe.

29. Procédé magnétooptique d'enregistrement et de lecture selon revendication 28, caractérisé en ce qu'en cas d'utilisation de lumière blanche, une proportionnalité existe entre la longueur d'onde lumineuse et la longueur d'onde magnétique enregistrée sur le support d'information.

30. Procédé magnétooptique d'enregistrement et de lecture selon revendications 23 et 28, caractérisé en ce que pendant la lecture en lumière monochromatique ou blanche, seules les longueurs d'onde diffractées et correspondant au premier maximum de diffraction servent à la lecture.

31. Procédé magnétooptique d'enregistrement et de lecture selon revendication 29, caractérisé en ce que la longueur d'onde supérieure $\lambda_2$ de la plage de longueur d'onde servant pour la lecture est égale au double de la longueur d'onde inférieure $\lambda_1$ de cette plage.

32. Procédé magnétooptique d'enregistrement et de lecture selon revendication 30, caractérisé en ce que la lumière utilisée pour la lecture présente des longueurs d'onde comprises entre 0,4 et 0,8 μm, et la longueur d'onde enregistrée présente des valeurs comprises entre $\Lambda = (2 \cdot 0,4/\sin\alpha)$ μm et $\Lambda = (2 \cdot 0,8/\sin\alpha)$ μm ($\alpha$ = angle de diffraction utilisé).

33. Procédé magnétooptique d'enregistrement et de lecture selon les revendications 1, 28 et 30 à 32, caractérisé par l'emploi d'un capteur réagissant à la longueur d'onde de la lumière diffractée.

34. Procédé magnétooptique d'enregistrement et de lecture selon revendication 28, caractérisé par l'emploi d'un filtre, reproduisant les couleurs lues avec une intensité différente ; et par un convertisseur optoélectrique transformant cette intensité en un signal électrique.

35. Procédé magnétooptique d'enregistrement et de lecture selon revendication 30, caractérisé en ce que des fluctuations d'itensité de la source lumineuse sont utilisées pour la transmission d'une information supplémentaire.

FIG. 1

FIG. 2

FIG. 3

FIG. 4

2